# EUROPEAN PATENT APPLICATION

(11) **EP 2 372 272 A1**
(43) Date of publication of application: **05.10.2011**
(21) Application number: 09833239.8
(22) Date of filing: 21.12.2009
(51) Int. Cl.: F25B 1/00, F25D 21/04

(54) **REFRIGERATION EQUIPMENT**

(30) Priority: 19.12.2008 JP 2008324318
(71) Applicant: Daikin Industries, Ltd., Osaka-shi, Osaka 530-8323 (JP)
(72) Inventor: ARII, Keiji, Sakai-shi Osaka 591-8511 (JP); SHINOHARA, Iwao, Sakai-shi Osaka 591-8511 (JP); TAKEGAMI, Masaaki, Sakai-shi Osaka 591-8511 (JP); KAJIMOTO, Akihiro, Sakai-shi Osaka 591-8511 (JP)
(74) Representative: HOFFMANN EITLE
(86) International application number: PCT/JP2009/007077
(87) International publication number: WO 2010/070932

(57) **Abstract**

An expansion valve control unit (34) is operated in a normal control mode to adjust the degree of opening of an electronic expansion valve (17) to control the degree of superheat of a refrigerant exited from an indoor heat exchanger (18) to a predetermined degree of superheat, or is operated in a deicing control mode to adjust the degree of opening of the electronic expansion valve (17) to control temperature of the suction pipe (11b) of the compressor (11) to a predetermined value or higher. The degree of opening of the electronic expansion valve (17) is adjusted in the deicing control mode when a start signal is output for the first time after a pause signal is output, and temperature of air outside a storage is lower than a predetermined value.

## Description

### TECHNICAL FIELD

The present invention relates to a refrigeration apparatus including an outdoor unit and an indoor unit, particularly to deicing of a suction pipe of a compressor.

### BACKGROUND ART

Refrigeration apparatuses which include a refrigerant circuit for performing a vapor compression refrigeration cycle to cool the inside of a cold/freezer storage for storing food etc. have been known. For example, Patent Document 1 teaches a refrigeration apparatus of this type. The refrigeration apparatus includes a refrigerant circuit including a variable capacity compressor, a condenser, an expansion valve, and an evaporator which are connected through pipes to perform a refrigeration cycle. The compressor and the condenser are contained in an outdoor device (an outdoor unit), and the expansion valve and the evaporator are contained in an indoor device (an indoor unit). The indoor device is placed inside a storage, and the outdoor device is placed outside the storage. The indoor and outdoor devices are connected through connecting pipes.

In the refrigeration apparatus of this type, as taught by Patent Document 2, for example, the degree of opening of the expansion valve is controlled to control the degree of superheat of a refrigerant exited from the evaporator to a constant degree of superheat (e.g., about 5°C). Specifically, the degree of superheat is controlled to be constant by controlling the degree of opening of the expansion valve.

### CITATION LIST

### PATENT DOCUMENTS

[Patent Document 1] Japanese Patent Application No. 2007-298218
[Patent Document 2] Japanese Patent Application No. H04-366365

### SUMMARY OF THE INVENTION

### TECHNICAL PROBLEM

Regarding the refrigeration apparatus for cooling the inside of the cold/freezer storage as described above, a set value of temperature inside the storage is considerably low as compared with general refrigeration apparatuses for air conditioners, and temperature of the evaporated refrigerant is considerably low. Thus, temperature of a suction pipe of the compressor considerably decreases, and the suction pipe is frosted. For example, in summer, the suction pipe is defrosted by heat of outside air which enters the outdoor unit, or heat of outside air introduced by a fan. However, when temperature of the outside air is low, e.g., in winter, the outside air which enters the outdoor unit, or the outside air introduced by the fan is cold. Thus, the outside air does not defrost the suction pipe, but accelerates the frosting to ice the suction pipe. When ice grows on the suction pipe, the ice may contact the other components and pipes, thereby causing oscillation of them, or generation of noise from them.

As a solution to such a disadvantage, the constant control of the degree of superheat may be stopped, and the degree of opening of the expansion valve may be reduced to increase the degree of superheat of the refrigerant. However, this reduces cooling capacity of the evaporator, and the temperature inside the storage becomes significantly higher than the set value. As a result, quality of the food etc. in the storage cannot be maintained. In the refrigeration apparatus of this type, in general, capacity of the compressor is controlled to keep evaporation pressure (low pressure) of the refrigerant constant. Thus, when the degree of opening of the expansion valve is reduced to increase the degree of superheat to be higher than the predetermined value, the low pressure (the evaporation pressure) decreases, and the capacity of the compressor is reduced to increase the evaporation pressure to the predetermined value. This reduces the amount of the refrigerant in the evaporator, thereby reducing the cooling capacity of the evaporator.

In view of the foregoing, the present invention has been achieved. An object of the invention is to prevent the temperature inside the storage from significantly increasing from a target value, and to prevent icing of the suction pipe of the compressor in the outdoor unit.

### SOLUTION TO THE PROBLEM

A first aspect of the invention is directed to a refrigeration apparatus including: a refrigerant circuit (10) in which a variable capacity compressor (11) and a heat-source-side heat exchanger (12) which are contained in an outdoor unit (2), and an expansion valve (17) and a utilization-side heat exchanger (18) which are contained in an indoor unit (3) are connected through pipes to perform a refrigeration cycle; a signal output unit (32) which outputs a start signal when temperature inside a storage has increased to a predetermined value or higher, and outputs a pause signal when the temperature inside the storage has decreased to a target value; a compressor control unit (33) which activates the compressor (11) when the start signal is output to cool the inside of the storage by the utilization-side heat exchanger (18) while controlling capacity of the compressor (11) to control evaporation pressure of a refrigerant in the utilization-side heat exchanger (18) to a target value, and stops the compressor (11) when the pause signal is output; and an expansion valve control unit (34) which is configured to perform, when the capacity of the compressor (11) is controlled by the compressor control unit (33), a first control operation of adjusting the degree of opening of the expansion valve (17) to control the degree of superheat of the refrigerant exited from the utilization-side heat exchanger (18) to a predetermined degree of superheat, or a second control operation of adjusting the degree of opening of the expansion valve (17) to control temperature of a suction pipe of the compressor (11) to a predetermined value or higher, the expansion valve control unit (34) performing the second control operation when the start signal is output for the first time after the pause signal is output, and temperature of air outside the storage is lower than a predetermined value.

In the refrigeration apparatus according to the first aspect of the invention, the compressor (11) is stopped when the inside temperature has decreased to the target value, and the pause signal is output (a "cooling off" state). Then, when the inside temperature has increased to the predetermined value, and the start signal is output, the compressor (11) is activated (a "cooling on" state). In this case, when the inside temperature is lower than the predetermined value, the expansion valve (17) is controlled by the second control operation. In this second control operation, the degree of opening of the expansion valve (17) is adjusted to keep the temperature of the suction pipe (11b) always at the predetermined value or higher. With the predetermined value determined as a temperature at which the suction pipe (11b) is not frosted, the frosting or icing of the suction pipe (11b) can be prevented even when the outside air temperature is low. Further, since the inside temperature is not very high in the first "cooling on" state after the "cooling off' state, the inside temperature is prevented from significantly increasing from the target value even when the second control operation for controlling the expansion valve (17) is performed. In the second control operation, the temperature of the suction pipe (11b) is increased to be higher than that in the first control operation, and the degree of opening of the expansion valve (17) is reduced. Thus, the evaporation pressure decreases, and the capacity of the compressor (11) is reduced to increase the evaporation pressure to the target value. This reduces the amount of the refrigerant flowing to the utilization-side heat exchanger (18), thereby reducing cooling capacity of the utilization-side heat exchanger (18). As a result, the inside temperature gradually increases. In the present invention, however, the second control operation is performed in the first "cooling on" state after the "cooling off" state, and the inside temperature, if increases, does not become significantly higher than the target value.

A second aspect of the invention is directed to a refrigeration apparatus including: a refrigerant circuit (10) in which a variable capacity compressor (11) and a heat-source-side heat exchanger (12) which are contained in an outdoor unit (2), and an expansion valve (17) and a utilization-side heat exchanger (18) which are contained in an indoor unit (3) are connected through pipes to perform a refrigeration cycle; a signal output unit (32) which outputs a start signal when temperature inside a storage has increased to a predetermined value or higher, and outputs a pause signal when the temperature inside the storage has decreased to a target value; a compressor control unit (33) which activates the compressor (11) when the start signal is output to cool the inside of the storage by the utilization-side heat exchanger (18) while controlling capacity of the compressor (11) to control evaporation pressure of a refrigerant in the utilization-side heat exchanger (18) to a target value, and stops the compressor (11) when the pause signal is output; a defrosting operation unit (31) which performs defrosting operation of heating the utilization-side heat exchanger (18) to defrost the utilization-side heat exchanger (18) when a predetermined condition is met; and an expansion valve control unit (34) which is configured to perform, when the capacity of the compressor (11) is controlled by the compressor control unit (33), a first control operation of adjusting the degree of opening of the expansion valve (17) to control the degree of superheat of the refrigerant exited from the utilization-side heat exchanger (18) to a predetermined degree of superheat, or a second control operation of adjusting the degree of opening of the expansion valve (17) to control temperature of a suction pipe of the compressor (11) to a predetermined value or higher, the expansion valve control unit (34) performing the first control operation when the capacity of the compressor (11) is controlled by the compressor control unit (33) immediately after the defrosting operation is finished, and then performing the second control operation when the pause signal and the start signal are sequentially output, and temperature of air outside the storage is lower than a predetermined value.

In the refrigeration apparatus according to the second aspect of the invention, the indoor heat exchanger (18) is defrosted by the defrosting operation, and then the compressor (11) is activated, and the expansion valve (17) is controlled by the first control operation to actively cool the inside of the storage. When the inside temperature has decreased to the target value, and the pause signal is output, the compressor (11) is stopped (a "cooling off" state). Then, when the inside temperature has increased to the predetermined value, and the start signal is output, the compressor (11) is activated (a "cooling on" state). In this case, when the temperature of the air outside the storage is lower than the predetermined value, the expansion valve (17) is controlled by the second control operation. In the second control operation, the degree of opening of the expansion valve (17) is adjusted to keep the temperature of the suction pipe (11b) always at the predetermined value or higher. With the predetermined value determined as a temperature at which the suction pipe (11b) is not defrosted, the frosting or icing of the suction pipe (11b) can be prevented even when the outside air temperature is low. Further, since the inside temperature is not very high in the first "cooling on" state after the "cooling off" state, the inside temperature is prevented from significantly increasing from the target value even when the expansion valve (17) is controlled by the second control operation. In the second control operation, the temperature of the suction pipe (11b) is increased to be higher than that in the first control operation, and the degree of opening of the expansion valve (17) is reduced. Thus, the evaporation pressure decreases, and the capacity of the compressor (11) is reduced to increase the evaporation pressure to the target value. This reduces the amount of the refrigerant flowing to the utilization-side heat exchanger (18), thereby reducing cooling capacity of the utilization-side heat exchanger (18). As a result, the inside temperature gradually increases. In the present invention, however, the second control operation is performed in the first "cooling on" state after the "cooling off' state, and the inside temperature, if increases, does not become significantly higher than the target value.

According to a third aspect of the invention related to the first or second aspect of the invention, the expansion valve control unit (34) switches from the second control operation to the first control operation when the temperature inside the storage has increased to a predetermined ceiling value higher than a target value of the temperature, and the increased temperature is kept for a predetermined period or longer when the second control operation is performed.

In the refrigeration apparatus according to the third aspect of the invention, when the inside temperature has gradually increased to the predetermined ceiling value or higher, and the increased temperature is kept for a predetermined period while the second control operation is performed, the second control operation is switched to the first control operation. Thus, the inside of the storage is actively cooled.

According to a fourth aspect of the invention related to the second aspect of the invention, the expansion valve control unit (34) stops the second control operation when the defrosting operation unit (31) performs the defrosting operation when the second control operation is performed.

In the refrigeration apparatus according to the fourth aspect of the invention, the second control operation is stopped when the defrosting operation is performed when the second control operation is performed.

### ADVANTAGES OF THE INVENTION

According to the first aspect of the invention, the degree of opening of the expansion valve (17) is controlled by the second control operation when the temperature of the air outside the storage is lower than the predetermined value, and the start signal is output for the first time after the pause signal is output. Thus, a state where the frosting of the suction pipe (11b) is accelerated is reliably sensed, thereby suitably and reliably preventing the icing of the suction pipe (11b). Further, with the expansion valve (17) controlled by the second control operation, significant increase of the inside temperature from the target value can reliably be prevented. Therefore, quality of the contents in the storage can be maintained, and oscillation of the outdoor unit (2) or generation of noise from the outdoor unit (2), which may be caused when ice grown on the suction pipe (11b) contacts the other components and pipes, can reliably be prevented.

According to the second aspect of the invention, the expansion valve (17) is always controlled by the first control operation immediately after the defrosting operation is finished. Then, when the pause signal and the start signal are sequentially output, the expansion valve (17) is controlled by the second control operation. Thus, also in this case, the same advantages as those of the first aspect of the invention can be obtained. Specifically, even when the inside temperature is higher than the target value after the defrosting operation, the expansion valve (17) is controlled by the first control operation to reduce the inside temperature to the target value, and then the expansion valve (17) is controlled by the second control operation. This can reliably prevent significant increase of the inside temperature from the target value.

According to the first and second aspects of the invention, the second control operation for controlling the expansion valve (17) controls the degree of opening of the expansion valve (17) to control the temperature of the suction pipe (11b) to the predetermined value or higher. Specifically, according to the present invention, the temperature of the suction pipe (11b) itself is controlled. Thus, the temperature of the suction pipe (11b) can precisely be controlled to a temperature at which the suction pipe (11b) is not frosted. This can reliably prevent the icing of the suction pipe (11b).

According to the third aspect of the invention, when the inside temperature has increased to the predetermined ceiling value or higher, and the increased temperature is kept for the predetermined period or longer when the second control operation for controlling the expansion valve (17) is performed, the control of the expansion valve (17) is switched from the second control operation to the first control operation. This can reliably prevent significant increase of the inside temperature from the target value, and quality of the contents in the storage can reliably be maintained. This improves reliability of the refrigeration apparatus (1).

### BRIEF DESCRIPTION OF THE DRAWINGS

[FIG. 1] FIG. 1 is a piping diagram illustrating the structure of a refrigeration apparatus of an embodiment.
[FIG. 2] FIG. 2 is a timing chart illustrating relationship between temperature inside a storage and operation modes.
[FIG. 3] FIG. 3 is a flow chart of control by a controller.
[FIG. 4] FIG. 4 is a flow chart of control by a controller.
[FIG. 5] FIG. 5 is a flow chart of control by a controller.

### DESCRIPTION OF EMBODIMENTS

An embodiment of the present invention will be described with reference to the drawings. The following embodiment is set forth merely for the purposes of a preferred example in nature, and is not intended to limit the scope, applications, and use of the invention.

### <General Structure>

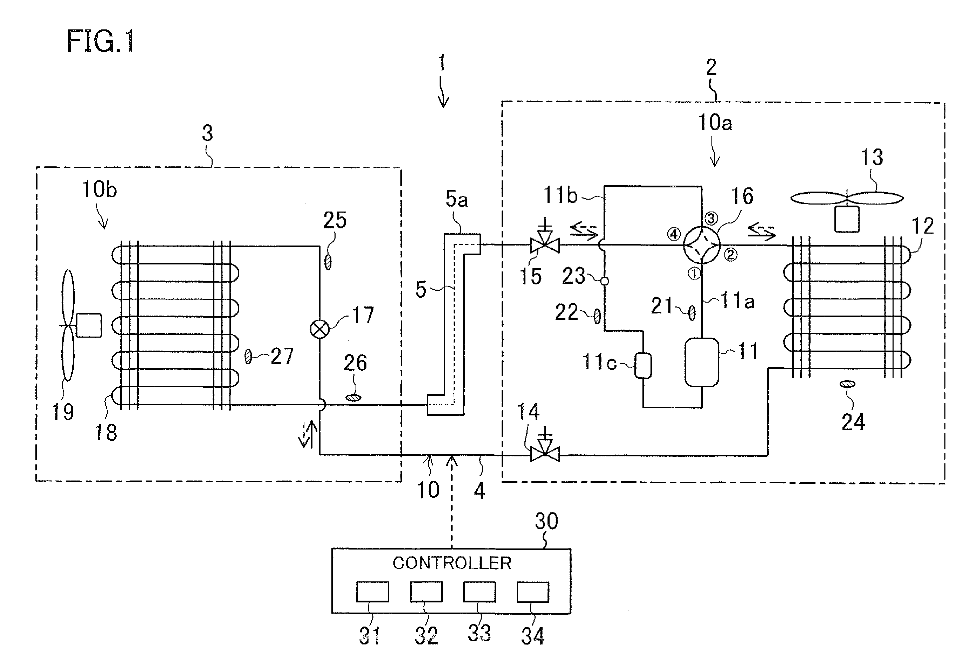

A refrigeration apparatus (1) of the present embodiment cools the inside of a cold/freezer storage for storing food etc. As shown in FIG. 1, the refrigeration apparatus (1) includes an outdoor unit (2) placed outside the cold/freezer storage, an indoor unit (3) placed inside the cold/freezer storage, and a controller (30). The refrigeration apparatus (1) is an apparatus of a separated type in which the outdoor unit (2) and the indoor unit (3) are connected through a liquid connecting pipe (4) and a gas connecting pipe (5).

An outdoor circuit (10a) is provided in the outdoor unit (2), and an indoor circuit (10b) is provided in the indoor unit (3). In this refrigeration apparatus (1), the outdoor circuit (10a) and the indoor circuit (10b) are connected through the above-described connecting pipes (4, 5), thereby constituting a refrigerant circuit (10) which performs a vapor compression refrigeration cycle.

A liquid stop valve (14) and a gas stop valve (15) are provided at ends of the outdoor circuit (10a), respectively. An end of the liquid connecting pipe (4) is connected to the liquid stop valve (14), and the other end of the liquid connecting pipe (4) is connected to a liquid end of the indoor circuit (10b). An end of the gas connecting pipe (5) is connected to the gas stop valve (15), and the other end of the gas connecting pipe (5) is connected to a gas end of the indoor circuit (10b).

The gas connecting pipe (5) is covered with an insulating cover (5a). This can prevent icing of the gas connecting pipe (5).

### <Outdoor Unit>

The outdoor circuit (10a) of the outdoor unit (2) includes a compressor (11), a four way valve (16), and an outdoor heat exchanger (12).

The compressor (11) is a variable capacity compressor whose capacity (the number of operation revolutions) can be changed by changing an output frequency of an inverter. A discharge pipe (11a) and a suction pipe (11b) are connected to a discharge end and a suction end of the compressor (11), respectively. The discharge pipe (11a) is connected to a first port of the four way valve (16), and the suction pipe (11b) is connected to a third port of the four way valve (16). An accumulator (11c) for preventing suction of a liquid refrigerant to the compressor (11) is provided in the discharge pipe (11a).

An end of the outdoor heat exchanger (12) (a gas end) is connected to a second port of the four way valve (16), and the gas stop valve (15) is connected to a fourth port of the four way valve (16). The four way valve (16) is configured to be able to switch between a first state (a state indicated by a solid line in FIG. 1) in which the first port and the second port communicate with each other, and the third port and the fourth port communicate with each other, and a second state (a state indicated by a broken line in FIG. 1) in which the first port and the fourth port communicate with each other, and the second port and the third port communicate with each other.

The other end of the outdoor heat exchanger (12) (a liquid end) is connected to the liquid stop valve (14). The outdoor heat exchanger (12) is a cross fin and tube heat exchanger, and constitutes a heat-source-side heat exchanger of the present invention. An outdoor fan (13) is arranged near the outdoor heat exchanger (12). The outdoor heat exchanger (12) is configured to allow heat exchange between the refrigerant and outside air (i.e., air outside the cold/freezer storage) sent by the outdoor fan (13).

Various types of sensors are provided in the outdoor circuit (10a). Specifically, a discharge pipe temperature sensor (21) for sensing temperature of the discharge pipe (11 a) is provided in the discharge pipe (11a). A suction pipe temperature sensor (22) for sensing temperature of the suction pipe (11b) is provided in the suction pipe (11b). A low pressure sensor (23) for sensing suction pressure of the compressor (11), i.e., evaporation pressure (low pressure) of the refrigerant in the refrigeration cycle, is provided in the suction pipe (11b). An outside temperature sensor (24) for sensing the temperature of the outside air is provided in the outdoor unit (2).

### <Indoor Unit>

The indoor circuit (10b) of the indoor unit (3) includes an electronic expansion valve (17) and an indoor heat exchanger (18) arranged in this order in a direction from the liquid end to the gas end.

The degree of opening of the electronic expansion valve (17) is controllable by an electric signal sent from outside, and the electronic expansion valve constitutes an expansion valve of the present invention. The indoor heat exchanger (18) is a cross fin and tube heat exchanger, and constitutes a utilization-side heat exchanger. An indoor fan (19) is arranged near the indoor heat exchanger (18). The indoor heat exchanger (18) is configured to allow heat exchange between the refrigerant and inside air (i.e., air inside the cold/freezer storage) sent by the indoor fan (19).

Various types of sensors are provided in the indoor circuit (14b). Specifically, a heat exchanger temperature sensor (25) for sensing evaporation temperature of the refrigerant is provided in a heat exchanger tube of the indoor heat exchanger (18). A gas pipe temperature sensor (26) for sensing the temperature of a gaseous refrigerant is provided near the gas end of the indoor circuit (10b). An inside temperature sensor (27) for sensing the temperature of the inside air (i.e., the air inside the cold/freezer storage) is provided in the indoor unit (3).

### <Controller>

The controller (30) includes an operation switching unit (31), a signal output unit (32), a compressor control unit (33), and an expansion valve control unit (34). The controller (30) receives values sensed by the above-described sensors (21-27).

The operation switching unit (31) is configured to switch the operation between cooling operation and defrosting operation, and constitutes a defrosting operation unit of the present invention. The signal output unit (32) outputs a start signal when the inside temperature (the temperature sensed by the inside temperature sensor (27)) has increased to a first ceiling value Ta or higher, and outputs a pause signal when the inside temperature has decreased to a set value Ts (a target value). The compressor control unit (33) activates the compressor (11), and controls its capacity when the start signal is output, and stops the compressor (11) when the pause signal is output. The expansion valve control unit (34) controls the degree of opening of the electronic expansion valve (14), and is operated in a normal control mode (first control operation), or a deicing control mode (second control operation). Details of the control operations will be described below.

### -Working Mechanism-

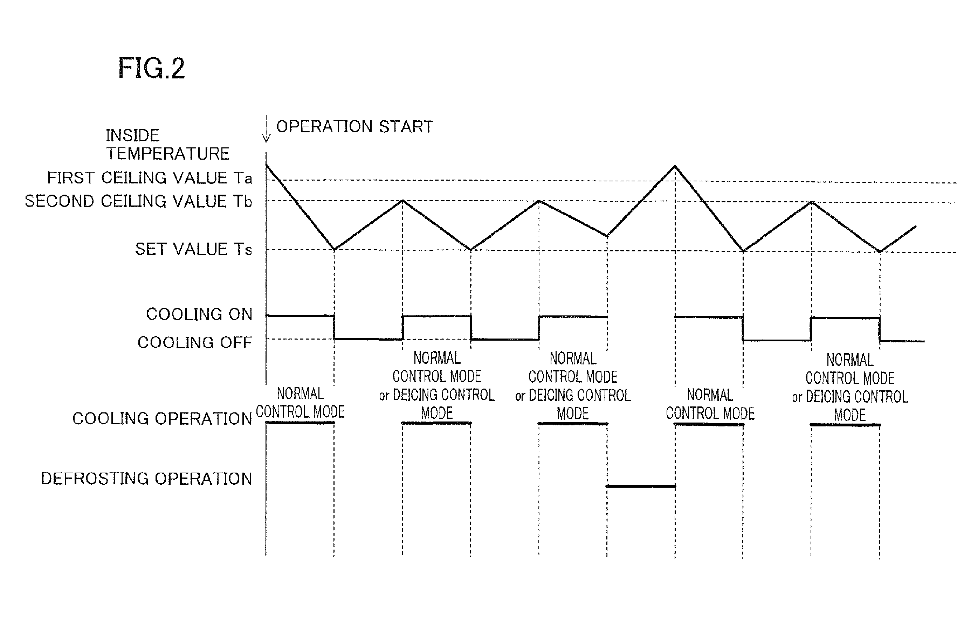

A working mechanism of the refrigeration apparatus (1) will be described below. Cooling operation, "cooling on" operation/"cooling off" operation, and defrosting operation will be described first, and then control operation of the controller (30) will be described with reference to FIGS. 2-5.

### <Cooling Operation>

The cooling operation will be described below. The cooling operation is performed to cool the inside of the cold/freezer storage by the indoor heat exchanger (18) to control the inside temperature (the temperature sensed by the inside temperature sensor (27)) to a set value Ts (a target value).

In the cooling operation, the four way valve (16) is switched to the first state, and the refrigerant flows in the refrigerant circuit (10) in a direction indicated by solid arrows shown in FIG. 1. In the refrigerant circuit (10), the outdoor heat exchanger (12) functions as a condenser, and the indoor heat exchanger (18) functions as an evaporator to perform a vapor compression refrigeration cycle.

Specifically, a high temperature and high pressure gaseous refrigerant compressed by the compressor (11) is discharged to the discharge pipe (11a), and flows into the outdoor heat exchanger (12) through the four way valve (16). In the outdoor heat exchanger (12), the refrigerant exchanges heat with the outside air to condense (to dissipate heat). The condensed refrigerant flows into the indoor circuit (10b) through the liquid connecting pipe (4). The refrigerant which entered the indoor circuit (14b) is decompressed by the electronic expansion valve (17), and flows into the indoor heat exchanger (18). In the indoor heat exchanger (18), the refrigerant exchanges heat with the inside air to evaporate. Thus, the inside air (the inside of the cold/freezer storage) is cooled. The low temperature and low pressure refrigerant evaporated in the indoor heat exchanger (18) flows into the outdoor circuit (10a) again through the gas connecting pipe (5). Since the gas connecting pipe (5) is covered with the insulating cover (5a), heat loss caused by absorption of heat of the outside air by the low temperature refrigerant in the gas connecting pipe (5), particularly in summer, is reduced. The refrigerant which entered the outdoor circuit (10a) is sucked into the compressor (11) through the four way valve (16) and the suction pipe (11b). The refrigerant sucked into the compressor (11) is compressed, and is discharged again. Thus, the above-described circulation of the refrigerant is repeated.

### <"Cooling On" Operation/"Cooling Off" Operation>

The "cooling on" operation and the "cooling off" operation will be described below with reference to FIG. 2. When the temperature inside the storage has decreased to the set value Ts when the cooling operation described above is performed, the signal output unit (32) outputs a pause signal based on a determination that the cooling of the storage is no longer necessary. When the pause signal is output, the compressor control unit (33) stops the compressor (11), and the refrigerant circuit (10) is turned off ("cooling off" operation). The fans (13, 19) are also stopped in the "cooling off" operation. When the inside temperature has gradually increased to a first ceiling value Ta (a value higher than the set value Ts by a predetermined value) after the "cooling off" operation, the signal output unit (32) outputs a start signal based on a determination that the inside of the storage has to be cooled. When the start signal is output, the compressor control unit (33) activates the compressor (11) to restart the cooling operation ("cooling on" operation). The fans (13, 19) are also activated in the "cooling on" operation.

### <Defrosting Operation>

The defrosting operation will be described below. The defrosting operation is a reverse cycle operation, and is performed to defrost the indoor heat exchanger (18) by heating the indoor heat exchanger (18).

In the defrosting operation, the four way valve (16) is switched to the second state, and the refrigerant flows in the refrigerant circuit (10) in a direction indicated by broken arrows shown in FIG. 1. In the refrigerant circuit (10), the outdoor heat exchanger (12) functions as an evaporator, and the indoor heat exchanger (18) functions as a condenser to perform a vapor compression refrigeration cycle.

Specifically, a high temperature and high pressure gaseous refrigerant compressed by the compressor (11) is discharged to the discharge pipe (11a), and flows into the indoor heat exchanger (18) of the indoor circuit (10b) through the four way valve (16) and the gas connecting pipe (5). In the indoor heat exchanger (18), frost adhered thereto is thawed by the refrigerant, and the refrigerant is cooled by the frost to condense (to dissipate heat). Thus, the indoor heat exchanger (18) is defrosted. The refrigerant condensed by the indoor heat exchanger (18) is decompressed by the electronic expansion valve (17), and flows into the outdoor heat exchanger (12) of the outdoor circuit (10a) through the liquid connecting pipe (4). In the outdoor heat exchanger (12), the refrigerant exchanges heat with the outside air to evaporate. The evaporated refrigerant is sucked into the compressor (11) through the four way valve (16) and the suction pipe (11b). The refrigerant sucked into the compressor (11) is compressed, and is discharged again. Thus, the above-described circulation of the refrigerant is repeated.

### <Working Mechanism of Operation Switching Unit>

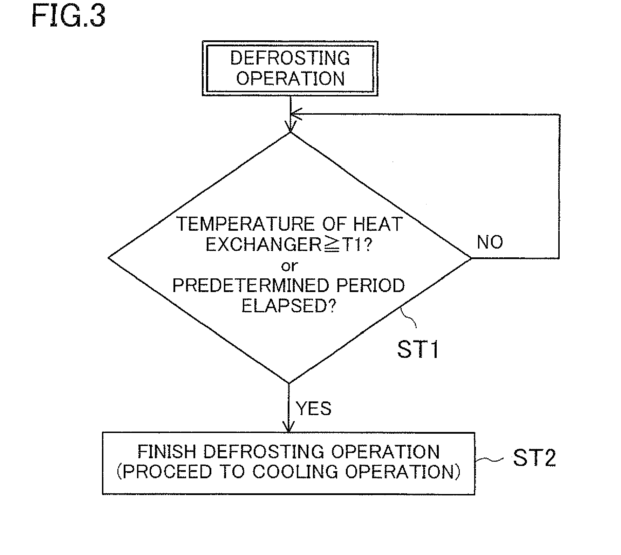

A working mechanism of the operation switching unit (31) will be described below with reference to FIGS. 2 and 3. The operation switching unit (31) performs the cooling operation when the compressor is activated. The operation switching unit (31) stops the cooling operation, and performs the defrosting operation when a period during which the cooling operation is performed (including a period for the "cooling off" state) reaches a predetermined period. Then, the operation switching unit (31) terminates the defrosting operation based on the flow shown in FIG. 3. Specifically, when the temperature of the indoor heat exchanger (18) (the temperature sensed by the heat exchanger temperature sensor (25)) has increased to a predetermined value T1 or higher, or a predetermined period has elapsed from the start of the defrosting operation (step ST1), the operation switching unit (31) terminates the defrosting operation to start the cooling operation (step ST2) based on a determination that the frost on the indoor heat exchanger (18) has been thawed. When the defrosting operation is performed, the operation switching unit (31) resets the period during which the cooling operation is performed, and counts a new period for the cooling operation from the end of the defrosting operation.

### <Working Mechanism of Compressor Control Unit>

A working mechanism of the compressor control unit (33) in the cooling operation will be described below with reference to FIG. 2.

In the cooling operation, the compressor control unit (33) controls the capacity (the number of operation revolutions) of the compressor (11) to control the pressure sensed by the low pressure sensor (23) to a set value Ps. Specifically, the capacity of the compressor (11) is controlled to control the evaporation pressure of the refrigerant in the indoor heat exchanger (18) to a target value. The set value Ps is determined based on the set value Ts of the inside temperature, and is set lower when the set value Ts is lower. The control of the capacity of the compressor (11) may be performed to control the temperature sensed by the heat exchanger temperature sensor (25) to its target value (a saturation temperature of the refrigerant corresponding to the set value Ps of the evaporation pressure), in place of controlling the pressure sensed by the low pressure sensor (23). Specifically, the capacity of the compressor (11) may be controlled with reference to the evaporation temperature of the refrigerant in the indoor heat exchanger (18).

As described above, the compressor control unit (33) stops the compressor (11) when the inside temperature has decreased to the set value Ts, and the pause signal is output. Thus, the circuit enters the "cooling off" state, in which the cooling of the inside of the storage is stopped. Then, when the inside temperature has increased to the first ceiling value Ta, and the start signal is output, the compressor control unit (33) restarts the compressor (11). Thus, the circuit enters the "cooling on" state, in which the cooling operation is restarted.

### <Working Mechanism of Expansion Valve Control Unit>

A working mechanism of the expansion valve control unit (34) in the cooling operation will be described below with reference to FIGS. 2, 4, and 5. As described above, in the cooling operation, the expansion valve control unit (34) controls the expansion valve in a normal control mode (first control operation), or a deicing control mode (second control operation).

The normal control mode is a mode for actively cooling the inside of the storage. In the normal control mode, the degree of opening of the electronic expansion valve (17) is adjusted to control a difference between the temperature sensed by the heat exchanger temperature sensor (25) and the temperature sensed by the gas pipe temperature sensor (26) to a constant value (for example, 5°C). Specifically, in the normal control mode, the expansion valve control unit (34) adjusts the degree of opening of the electronic expansion valve (17) to control the degree of superheat of the refrigerant exited from the indoor heat exchanger (18) to a predetermined degree of superheat (5°C). The degree of superheat is determined to such a degree that the refrigerant sucked into the compressor (11) is not liquefied. For example, suppose that the set value Ts of the inside temperature is -20°C, the evaporation temperature of the refrigerant is -30°C, and the degree of superheat is 5°C, the temperature of the refrigerant exited from the indoor heat exchanger (18) is -25°C (= -30°C+5°C).

The deicing control mode is a mode for preventing the icing of the suction pipe (11b) of the compressor (11) while cooling the inside of the storage to some extent. In the deicing control mode, the degree of opening of the electronic expansion valve (17) is adjusted to control the temperature sensed by the suction pipe temperature sensor (22) (i.e., the temperature of the suction pipe (11b) of the compressor (11)) to a predetermined value Ti or higher. The predetermined value Ti is set to a temperature at which the suction pipe (11b) is not frosted, for example, 3°C.

As described above, in the normal control mode, the low temperature (e.g., -25°C) refrigerant is sucked into the compressor (11) through the suction pipe (11b). Thus, the suction pipe (11 b) is easily cooled and frosted. For example, in summer, the frost is thawed by heat of the outside air which enters the outdoor unit (2), or heat of the outside air introduced by the outdoor fan (13), and the suction pipe (11b) is hardly iced. However, when the temperature of the outside air is low, e.g., in winter, the outside air which enters the outdoor unit (2), or the outside air introduced by the outdoor fan (13) is relatively cold. Thus, the suction pipe (11b) cannot be defrosted by the heat of the air, and the frosting is accelerated to ice the suction pipe (11b). In such a case, the expansion valve control unit (34) adjusts the degree of opening of the electronic expansion valve (17) in the above-described deicing control mode to keep the temperature of the suction pipe (11b) at 3°C or higher even when the temperature of the outside air is low, such as in winter. This can reliably prevent the frosting or icing of the suction pipe (11b). Thus, in the deicing control mode, the temperature of the suction pipe (11b), i.e., the temperature of the refrigerant flowing through the suction pipe (11b), is higher than the temperature of the refrigerant in the normal control mode. Therefore, in the deicing control mode, the degree of superheat of the refrigerant exited from the indoor heat exchanger (18) is set higher than that in the normal control mode, and the degree of the opening of the electronic expansion valve (17) is smaller than that in the normal control mode.

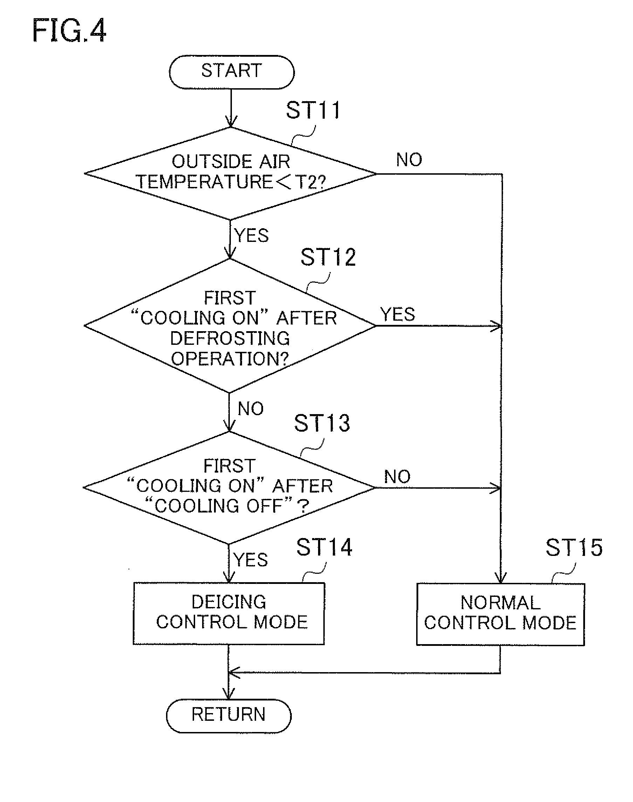

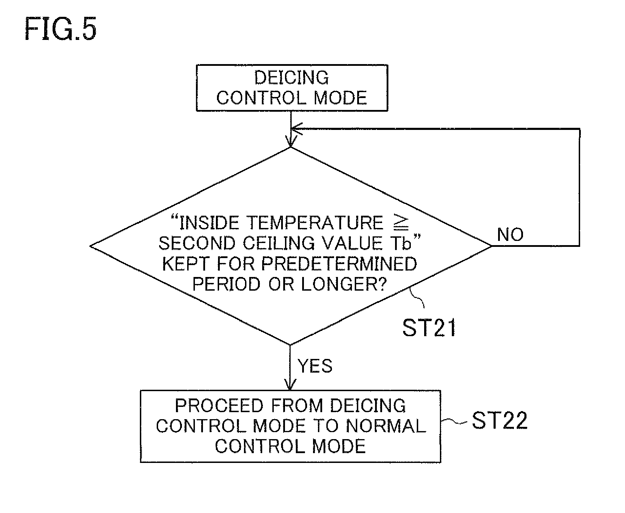

Switching between the normal control mode and the deicing control mode of the expansion valve control unit (34) will be described below. The expansion valve control unit (34) selects one of the two control modes based on the flows shown in FIGS. 4 and 5.

In step ST11 of the flow shown in FIG. 4, whether the temperature of the outside air (the temperature sensed by the outside temperature sensor (24)) is lower than a predetermined value T2 is determined. When the outside air temperature is the predetermined value T2 or higher, the flow proceeds to step ST15 to select the normal control mode based on a determination that the frosting of the suction pipe (11b) is not accelerated by the outside air. On the other hand, when the outside air temperature is lower than the predetermined value T1, the flow proceeds to step ST12 based on a determination that the frosting of the suction pipe (11b) may be accelerated by the outside air. The predetermined value T2 may be set to 15°C, for example. The value may optionally be changed.

In step ST12, whether the current "cooling on" operation (output of the start signal) is the first "cooling on" operation (output of the start signal) after the defrosting operation is finished is determined. Specifically, whether the current cooling operation is performed immediately after the defrosting operation is finished is determined. When it is determined that the current operation is the first "cooling on" operation after the defrosting operation is finished (i.e., the cooling operation performed immediately after the defrosting operation), the normal control mode is selected (step ST15). As shown in FIG. 2, the cooling of the inside of the storage is stopped in the defrosting operation, and the inside temperature exceeds the set value Ts. Thus, the normal control mode is selected immediately after the defrosting operation is finished to actively cool the inside of the storage. When it is determined that the current "cooling on" operation is not the first "cooling on" operation (output of the start signal) after the defrosting operation, the flow proceeds to step ST13.

In step ST13, whether the current "cooling on" operation (output of the start signal) is the first "cooling on" operation (output of the start signal) after the "cooling off" operation (output of the pause signal) is determined. When it is determined that the current "cooling on" operation is not the first "cooling on" operation after the "cooling off" operation, the normal control mode is selected based on a determination that the cooling of the inside of the storage is still necessary (step ST15). Thus, as shown in FIG. 2, the expansion valve control unit (34) adjusts the degree of opening of the electronic expansion valve (17) in the normal control mode when the compressor is first activated for the cooling operation, for example. On the other hand, when it is determined that the current "cooling on" operation is the first "cooling on" operation after the "cooling off' operation, the deicing control mode is selected based on a determination that the cooling of the inside of the storage is no longer necessary because the "cooling off' operation is once performed (step ST14).

Thus, in steps ST12, and ST13, whether the inside of the storage has to be cooled actively in the normal control mode is determined. Specifically, this control is performed to select the deicing control mode while preferentially cooling the inside of the storage. This can prevent significant increase of the inside temperature from the set value Ts, and can prevent the icing of the suction pipe (11b).

As described above, the expansion valve control unit (34) of the present embodiment selects the deicing control mode when the outside air temperature is lower than the predetermined value T2, and the "cooling on" operation is performed for the first time after the "cooling off' operation. In the first "cooling on" operation after the defrosting operation is finished, the expansion valve control unit (34) of the present embodiment selects the normal control mode to prioritize the cooling of the inside of the storage even when the outside air temperature is lower than the predetermined value T2. Then, after the "cooling off" operation is performed, and the following "cooling on" operation is performed, the expansion valve control unit (34) selects the deicing control mode on condition that the outside air temperature is lower than the predetermined value T2. Even in the cooling operation with the expansion valve control unit (34) controlling the electronic expansion valve (17) in the deicing control mode, the inside temperature may decrease to the set value Ts, and the "cooling off" operation may be performed. Also in this case, the deicing control mode is selected in the following "cooling on" operation based on the flow shown in FIG. 4. Specifically, in the present embodiment, the cooling operation by controlling the electronic expansion valve (17) in the deicing control mode may be repeated while the "cooling off" operation is performed between the cooling operations.

As shown in FIG. 5, the expansion valve control unit (34) of the present embodiment switches the deicing control mode to the normal control mode in the cooling operation. In the cooling operation by controlling the electronic expansion valve (17) in the deicing control mode, the deicing control mode is switched to the normal control mode (step ST22) when the inside temperature has increased to a second ceiling value Tb, and the increased temperature is kept for a predetermined period or longer (step ST21). Thus, when the inside temperature has increased to some extent in the operation in the deicing control mode, the expansion valve control unit (34) switches from the deicing control mode to the normal control mode to prioritize the cooling of the inside of the storage. The second ceiling value Tb is higher than the set value Ts of the inside temperature, and is lower than the first ceiling value Ta. For example, the second ceiling value Tb is set to 10°C, and the predetermined period is set to 20 minutes. These values may optionally be changed.

In the present embodiment, the defrosting operation is performed when a period during which the cooling operation is performed (including a period for the "cooling off" state) reaches the predetermined period. Thus, in the cooling operation, when the defrosting operation is performed while the expansion valve control unit (34) is controlling the electronic expansion valve (17) in the deicing control mode, the control of the expansion valve control unit (34) in the deicing control mode is stopped. In the defrosting operation, the expansion valve control unit (34) controls the degree of opening of the electronic expansion valve (17) to control the degree of superheat of the refrigerant exited from the outdoor heat exchanger (12) to the predetermined degree of superheat.

In the deicing control mode, as described above, the degree of opening of the electronic expansion valve (17) is reduced (the valve is less opened) as compared with that of the normal control mode. In this state, the low pressure of the refrigeration cycle (i.e., the evaporation pressure of the refrigerant) decreases. When the low pressure decreases, the capacity (the number of operation revolutions) of the compressor (11) is reduced to increase the low pressure to the set value Ps. When the capacity of the compressor (11) is reduced, the amount of the refrigerant flowing to the indoor heat exchanger (18) decreases, thereby reducing cooling capacity of the indoor heat exchanger (18). As a result, the inside temperature gradually increases to the second ceiling value Tb or higher. In this state, the contents in the storage may be spoiled. Therefore, the deicing control mode is switched to the normal control mode to actively cool the inside of the storage.

### -Advantages of Embodiment-

For the expansion valve control unit (34) of the refrigeration apparatus (1) of the present embodiment, the deicing control mode is established for controlling the degree of opening of the electronic expansion valve (17) to control the temperature sensed by the suction pipe temperature sensor (22) to the predetermined value Ti or higher. Specifically, the temperature of the suction pipe (11b) itself is controlled. Thus, the temperature of the suction pipe (11b) can precisely be controlled to a temperature at which the suction pipe (11b) is not frosted, thereby preventing the icing of the suction pipe (11b).

The expansion valve control unit (34) of the present embodiment is configured to select the deicing control mode when the outside air temperature is lower than the predetermined value T2, and the "cooling on" operation (cooling operation) is performed for the first time after the "cooling off' operation. Thus, the state where the frosting of the suction pipe (11b) is accelerated can reliably be sensed, thereby suitably and reliably preventing the icing of the suction pipe (11b), and reliably preventing significant increase of the inside temperature from the set value Ts. Therefore, quality of the contents in the storage can be maintained, and oscillation of the outdoor unit (2) or generation of noise from the outdoor unit (2), which may be caused when ice grown on suction pipe (11b) contacts the other components and pipes, can reliably be prevented.

When the defrosting operation is performed, the expansion valve control unit (34) of the present embodiment inevitably selects the normal control mode in the "cooling on" operation (cooling operation) immediately after the defrosting operation. Then, when the "cooling on" operation (cooling operation) is repeated with the "cooling off" operation performed between the "cooling on" operations, the deicing control mode is selected on condition that the above-described conditions are met. Thus, in this case, the above-described advantages can be obtained in the same manner.

The expansion valve control unit (34) of the present embodiment is configured to switch from the deicing control mode to the normal control mode when the inside temperature has increased to the second ceiling value Tb or higher, and the increased temperature is kept for the predetermined period in the deicing control mode. This can prevent the significant increase of the inside temperature from the set value Ts, and the quality of the contents in the storage can reliably be maintained. Thus, the reliability of the refrigeration apparatus (1) improves.

### [Other Embodiments]

The above-described embodiment may be modified in the following manner.

For example, in the deicing control mode of the above embodiment, the degree of opening of the electronic expansion valve (17) is controlled to control the temperature sensed by the suction pipe temperature sensor (22) to the predetermined value Ti or higher. However, the same advantages of the above embodiment can be obtained by the following control. Specifically, the degree of opening of the electronic expansion valve (17) may be adjusted to control the temperature of the gas connecting pipe (5), or the temperature of the refrigerant exited from the indoor heat exchanger (18) to a predetermined value or higher. In this case, the predetermined value is set to a certain value with which the temperature of the suction pipe (11b) is controlled to the predetermined value Ti or higher.

In the above embodiment, the defrosting operation can be operated. However, the present invention is advantageous even for a refrigeration apparatus which cannot perform the defrosting operation. In this case, step ST12 in the flow shown in FIG. 4 is not performed.

The defrosting operation of the above embodiment is reverse cycle operation. However, the defrosting operation of the present invention may be performed in any way. For example, the defrosting operation may be performed by heating the indoor heat exchanger (18) with an electric heater etc. to defrost the indoor heat exchanger (18).

### INDUSTRIAL APPLICABILITY

As described above, the present invention is useful for a low temperature refrigeration apparatus for cooling the inside of a cold/freezer storage.

### DESCRIPTION OF REFERENCE CHARACTERS

- 1: Refrigeration apparatus
- 2: Indoor unit
- 3: Outdoor unit
- 10: Refrigerant circuit
- 11: Compressor
- 11b: Suction pipe
- 12: Outdoor heat exchanger (heat-source-side heat exchanger)
- 17: Electronic expansion valve (expansion valve)
- 18: Indoor heat exchanger (utilization-side heat exchanger)
- 31: Operation Switching Unit (defrosting operation unit)
- 32: Signal output unit
- 33: Compressor control unit
- 34: Expansion valve control unit

## Claims

1. A refrigeration apparatus comprising:
a refrigerant circuit (10) in which a variable capacity compressor (11) and a heat-source-side heat exchanger (12) which are contained in an outdoor unit (2), and an expansion valve (17) and a utilization-side heat exchanger (18) which are contained in an indoor unit (3) are connected through pipes to perform a refrigeration cycle;
a signal output unit (32) which outputs a start signal when temperature inside a storage has increased to a predetermined value or higher, and outputs a pause signal when the temperature inside the storage has decreased to a target value;
a compressor control unit (33) which activates the compressor (11) when the start signal is output to cool the inside of the storage by the utilization-side heat exchanger (18) while controlling capacity of the compressor (11) to control evaporation pressure of a refrigerant in the utilization-side heat exchanger (18) to a target value, and stops the compressor (11) when the pause signal is output; and
an expansion valve control unit (34) which is configured to perform, when the capacity of the compressor (11) is controlled by the compressor control unit (33), a first control operation of adjusting the degree of opening of the expansion valve (17) to control the degree of superheat of the refrigerant exited from the utilization-side heat exchanger (18) to a predetermined degree of superheat, or a second control operation of adjusting the degree of opening of the expansion valve (17) to control temperature of a suction pipe of the compressor (11) to a predetermined value or higher, the expansion valve control unit (34) performing the second control operation when the start signal is output for the first time after the pause signal is output, and temperature of air outside the storage is lower than a predetermined value.

2. A refrigeration apparatus comprising:
a refrigerant circuit (10) in which a variable capacity compressor (11) and a heat-source-side heat exchanger (12) which are contained in an outdoor unit (2), and an expansion valve (17) and a utilization-side heat exchanger (18) which are contained in an indoor unit (3) are connected through pipes to perform a refrigeration cycle;
a signal output unit (32) which outputs a start signal when temperature inside a storage has increased to a predetermined value or higher, and outputs a pause signal when the temperature inside the storage has decreased to a target value;
a compressor control unit (33) which activates the compressor (11) when the start signal is output to cool the inside of the storage by the utilization-side heat exchanger (18) while controlling capacity of the compressor (11) to control evaporation pressure of a refrigerant in the utilization-side heat exchanger (18) to a target value, and stops the compressor (11) when the pause signal is output;
a defrosting operation unit (31) which performs defrosting operation of heating the utilization-side heat exchanger (18) to defrost the utilization-side heat exchanger (18) when a predetermined condition is met; and
an expansion valve control unit (34) which is configured to perform, when the capacity of the compressor (11) is controller by the compressor control unit (33), a first control operation of adjusting the degree of opening of the expansion valve (17) to control the degree of superheat of the refrigerant exited from the utilization-side heat exchanger (18) to a predetermined degree of superheat, or a second control operation of adjusting the degree of opening of the expansion valve (17) to control temperature of a suction pipe of the compressor (11) to a predetermined value or higher, the expansion valve control unit (34) performing the first control operation when the capacity of the compressor (11) is controlled by the compressor control unit (33) immediately after the defrosting operation is finished, and then performing the second control operation when the pause signal and the start signal are sequentially output, and temperature of air outside the storage is lower than a predetermined value.

3. The refrigeration apparatus of claim 1 or 2, wherein
the expansion valve control unit (34) switches from the second control operation to the first control operation when the temperature inside the storage has increased to a predetermined ceiling value higher than a target value of the temperature, and the increased temperature is kept for a predetermined period or longer when the second control operation is performed.

4. The refrigeration apparatus of claim 2, wherein
the expansion valve control unit (34) stops the second control operation when the defrosting operation unit (31) performs the defrosting operation when the second control operation is performed.
